# EUROPÄISCHE PATENTSCHRIFT

(11) **EP 0 377 100 B1**
(45) Veröffentlichungstag und Bekanntmachung des Hinweises auf die Patenterteilung: **04.08.1993**
(21) Anmeldenummer: 89121266.4
(22) Anmeldetag: 17.11.1989
(51) Int. Cl.: A47L 9/28, A47L 9/19, H01R 27/00, H01R 13/64

(54) **Entstauber und staubfreies Arbeitsgerät**
Vacuum cleaner and dust-free working tool
Dépoussiéreur et instrument de travail exempt de poussière

(30) Priorität: 30.12.1988 DE 8816200 U
(43) Veröffentlichungstag der Anmeldung: 11.07.1990
(73) Patentinhaber: C. & E. FEIN GmbH & Co., D-70176 Stuttgart (DE)
(72) Erfinder:
(74) Vertreter: Witte, Alexander, Dr.-Ing.

(56) Entgegenhaltungen:
- EP-A- 0 022 224
- CH-A- 315 010
- DE-A- 2 814 729
- DE-A- 3 307 002
- DE-A- 3 710 619
- FR-A- 1 448 070
- GB-A- 2 113 078
- US-A- 3 319 282

## Beschreibung

Die Erfindung betrifft einen Entstauber mit einem von einer kraftgetriebenen Handwerkzeugmaschine erzeugten Staub in einen Staubfangbehälter befördernden Staubsauggebläse, mit einer Aufnahme für ein Steckelement zur Herstellung der Energieversorgung für die Handwerkzeugmaschine und mit einer Staubfangbehälterfüllabschaltung, welche bei einem bestimmten Unterdruck zwischen Staubfangbehälter und Staubsauggebläse die Energieversorgung der Werkzeugmaschine abschaltet.

Ferner betrifft die Erfindung ein Arbeitsgerät mit geringer Staubentwicklung, umfassend eine Handwerkzeugmaschine mit einer einem Werkzeug derselben zugeordneten Staubabsaugung und einen mit letzteren über einen Saugschlauch verbundenen Entstauber, wobei der Handwerkzeugmaschine ein Steckelement zugeordnet ist, mit welchem beim Einstecken in eine Aufnahme am Entstauber die Energieversorgung der Handwerkzeugmaschine herstellbar ist.

Derartige im wesentlichen staubfreie Arbeitsgeräte und Entstauber sind beispielsweise aus dem Firmenprospekt "Fein-Schleifsystem C", Nr. 188 41 664 008 BX 8.86 bekannt. Dabei besteht das Problem, daß die Entstauber zum Einsatz mit mehreren Handwerkzeugmaschinen geeignet sein sollen, wobei der Luftdurchsatz, bedingt durch unterschiedlich ausgebildete Werkzeuge und unterschiedlich ausgebildete Staubabsaugungen, an diesen Handwerkzeugmaschinen von Handwerkzeugmaschine zu Handwerkzeugmaschine unterschiedlich groß ist. Wenn nun der Entstauber wie bekannt ausgebildet ist und bei einem bestimmten Unterdruck zwischen Staubfangbehälter und Staubsauggebläse, welcher ein Maß für den Füllgrad des Staubfangbehälters ist, die Staubfangbehälterfüllabschaltung die Energieversorgung der Handwerkzeugmaschine abschaltet, so erfolgt dies bei den unterschiedlichen Handwerkzeugmaschinen mit unterschiedlichem Luftdurchsatz bei einem unterschiedlich hohen Füllgrad des Staubfangbehälters, da der im Entstauber von der Staubfangbehälterfüllabschaltung gemessene Unterdruck zum einen von dem Füllgrad des Staubfangbehälters, zum anderen aber auch von dem Luftdurchsatz bei der jeweiligen Handwerkzeugmaschine, bedingt durch die Ausbildung von deren Werkzeug und deren Staubabsaugung, abhängt.

Eine derartige unterschiedliche Füllung des Staubfangbehälters ist jedoch unerwünscht, da dieser unabhängig von der verwendeten Handwerkzeugmaschine möglichst stets gleich, vorzugsweise ungefähr zu 75 %, gefüllt sein soll.

Durch die DE-A-3 710 619 ist ferner ein transportabler Industriestaubsauger bekannt geworden, der mit einem Schleifgerät verbunden ist. Das Handwerkzeug ist mit dem Industriestaubsauger über einen Saugschlauch, in dem ein Strömungssensor zur Drehzahlregelung in Abhängigkeit vom Füllgrad des Filters vorgesehen ist, verbunden.

Der Erfindung liegt daher die Aufgabe zugrunde, einen Entstauber und ein Arbeitsgerät mit geringer Staubentwicklung der gattungsgemäßen Art derart zu verbessern, daß beim Einsatz mehrerer Handwerkzeugmaschinen mit unterschiedlichem Luftdurchsatz stets die Energieversorgung der Handwerkzeugmaschine bei einem gleichhohen Füllgrad des Staubfangbehälters abgeschaltet wird.

Diese Aufgabe wird bei einem Entstauber der eingangs beschriebenen Art erfindungsgemäß dadurch gelöst, daß der Entstauber eine erste Aufnahme für ein erstes Steckelement und eine zweite Aufnahme für ein zweites Steckelement aufweist, daß die Aufnahmen so ausgebildet sind, daß nur bei in die erste Aufnahme eingesteckten erstem oder in die zweite Aufnahme eingestecktem zweiten Steckelement eine Energieversorgung der Handwerkzeugmaschine erfolgt und daß bei in die erste Aufnahme eingestecktem ersten Steckelement die Staubfangbehälterfüllabschaltung bei einem ersten Unterdruck und bei in die zweite Aufnahme eingestecktem zweiten Steckelement die Staubfangbehälterfüllabschaltung bei einem zweiten Unterdruck abschaltet.

Der Vorteil eines derart ausgebildeten Entstaubers ist darin zu sehen, daß mit diesem sichergestellt ist, daß der erste Unterdruck und der zweite Unterdruck so wählbar sind, daß der Staubfangbehälter stets in optimaler Weise gefüllt wird und daß außerdem auch Fehlbedienungen ausgeschlossen werden, da jedes Steckelement nur in die für dieses vorgesehene Aufnahme einsteckbar ist und dadurch stets sichergestellt ist, daß die Staubfangbehälterfüllabschaltung bei dem einem optimal gefüllten Staubfangbehälter entsprechenden Unterdruck abschaltet.

Es liegt ebenfalls im Rahmen der vorliegenden Erfindung, noch weitere Aufnahmen für weitere Steckelemente vorzusehen.

Ein besonders einfaches Ausführungsbeispiel des erfindungsgemäßen Entstaubers sieht vor, daß die Staubfangbehälterfüllabschaltung für die Abschaltung beim ersten oder zweiten Unterdruck einen ersten und einen zweiten Unterdruckschalter umfaßt.

Bei den vorstehend beschriebenen Ausführungsbeispielen wurde nicht im Detail angegeben, wie die Aufnahmen ausgebildet sein sollen, da nur bei in die erste Aufnahme eingestecktem erstem oder in die zweite Aufnahme eingestecktem zweiten Steckelement eine Herstellung der Energieversorgung der Handwerkzeugmaschine erfolgt. Eine erste konkretisierte Ausführungsform des erfindungsgemäßen Entstaubers sieht daher vor, daß die erste und die zweite Aufnahme unterschiedlich gestaltete Gehäuseelemente aufweisen, welche mit entsprechend unterschiedlich gestalteten Gehäuseelementen der Steckelemente in formschlüssigen Eingriff bringbar sind.

Prinzipiell können bei dem erfindungsgemäßen Entstauber zwei nebeneinander angeordnete Aufnahmen vorgesehen sein. Als besonders günstig hat es sich jedoch erwiesen, wenn die erste und die zweite Aufnahme in einem einzigen Einsteckelement vorgesehen sind.

Zweckmäßigerweise ist dieses Einsteckelement so gestaltet, daß dieses ein Gehäuse aufweist, in welchem die beiden Aufnahmen angeordnet sind.

Gemäß den bisher beschriebenen Merkmalen der erfindungsgemäßen Lösung könnten die beiden Aufnahmen unabhängig voneinander in dem Einsteckelement angeordnet sein. Um jedoch zu verhindern,daß eine Bedienungsperson lange suchen muß, welche Aufnahme nun die für den jeweiligen Stecker vorgesehene ist, ist es von Vorteil, wenn das Gehäuse des Einsteckelements ein für beide Aufnahmen gemeinsames Formschlußelement umfaßt, so daß beim Einstecken eines Steckelements stets dieses gemeinsame Formschlußelement das Auffinden der jeweiligen Aufnahme erleichtert.

Bei einem bevorzugten Ausführungsbeispiel ist dabei vorgesehen, daß das Formschlußelement eine vom Steckelement zumindest teilweise umschlossene oder dieses umschließende Steckaufnahme ist.

Bei den bislang beschriebenen Ausführungsbeispielen wurde nicht genau spezifiziert, wie die Energieversorgung der Handwerkzeugmaschine über den Entstauber erfolgen soll. Grundsätzlich könnte hierzu eine separate Stromversorgung möglich sein und das Steckelement unabhängig von der Stromversorgung, beispielsweise am Saugschlauch, angeordnet sein und lediglich dazu dienen, die Energieversorgung, beispielsweise über Schalter, herzustellen. Eine konstruktiv einfache und kostengünstige Ausführungsform der erfindungsgemäßen Lösung sieht jedoch vor, daß die Energieversorgung der Handwerkzeugmaschine über die Aufnahme und die Steckelemente geführt ist.

Im vorstehenden Fall ist es dabei zusätzlich sinnvoll, wenn die Aufnahmen und die Steckelemente steckbare Versorgungsanschlüsse umfassen.

Hierbei ist es dann günstig, wenn die Versorgungsanschlüsse von ineinandersteckbaren Gehäuseelementen umschlossen sind.

Im vorstehenden wurde ein Ausführungsbeispiel beschrieben, bei welchem unterschiedlich gestaltete Gehäuseelemente sicherstellen, daß das erste Steckelement lediglich in der ersten Aufnahme und das zweite Steckelement lediglich in der zweiten Aufnahme in der Lage sind, die Energieversorgung der jeweiligen Handwerkzeugmaschine herzustellen. Alternativ oder ergänzend dazu ist es aber auch bei den Ausführungsformen, bei welchen die Aufnahmen und die Steckelemente steckbare Versorgungsanschlüsse umfassen, möglich, dies dadurch sicherzustellen, daß die Versorgungsanschlüsse der ersten Aufnahme und die Versorgungsanschlüsse der zweiten Aufnahme unterschiedlich ausgebildet sind.

Die erfindungsgemäßen Handwerkzeugmaschinen können prinzipiell beispielsweise pneumatisch betrieben sein. In der Regel ist es jedoch vorteilhaft, diese elektrisch zu betreiben, so daß zweckmäßigerweise die Versorgungsanschlüsse jeder Aufnahme mindestens zwei elektrische Kontakte umfassen.

Hierbei kann dadurch, daß die Steckkontakte unterschiedlich angeordnet sind, in einfachster Weise sichergestellt werden, daß eine Energieversorgung der Handwerkzeugmaschine lediglich durch das in die erste Aufnahme eingesteckte erste Steckelement oder das in die zweite Aufnahme eingesteckte zweite Steckelement herstellbar ist.

Um die Zahl der Steckkontakte und somit den konstruktiven kostenmäßigen Aufwand zu reduzieren, ist bei einer bevorzugten Ausführungsform vorgesehen, daß der Versorgungsanschluß der ersten Aufnahme und der der zweiten Aufnahme einen gemeinsamen Steckkontakt aufweisen.

Bei einem Ausführungsbeispiel, welches zwei Unterdruckschalter aufweist und bei welchem die Aufnahmen die Versorgungsanschlüsse umfassen, ist vorgesehen, daß durch den ersten Unterdruckschalter die Energieversorgung für den Versorgungsanschluß der ersten Aufnahme und durch den zweiten Unterdruckschalter die Energieversorgung für den Versorgungsanschluß der zweiten Aufnahme abschaltbar ist.

Schließlich kann aus Sicherheitsgründen bei einer vereinfachten Ausführungsform noch zusätzlich vorgesehen sein, daß die beiden Versorgungsanschlüsse einen zusätzlichen, für beide gemeinsamen Nulleiteranschluß aufweisen.

Die erfindungsgemäße Aufgabe wird darüberhinaus auch noch bei einem Arbeitsgerät mit geringer Staubentwicklung gelöst, bei welchem eine erste Handwerkzeugmaschine mit einem ersten Steckelement und eine zweite Handwerkzeugmaschine mit einem zweiten Steckelement versehen sind, und bei welchem der Entstauber nach einem der voranstehend beschriebenen Ausführungsformen ausgebildet ist.

Weitere Merkmale und Vorteile der vorliegenden Erfindung sind Gegenstand der nachfolgenden Beschreibung sowie der zeichnerischen Darstellung eines Ausführungsbeispiels. In der Zeichnung zeigen:
- Fig. 1: eine Gesamtansicht eines erfindungsgemäßen Arbeitsgeräts mit geringer Staubentwicklung, umfassend eine Handwerkzeugmaschine und einen erfindungsgemäßen Entstauber;
- Fig. 2: eine teilweise aufgebrochene Darstellung des Entstaubers;
- Fig. 3: eine vergrößerte Darstellung einer Steckdose des erfindungsgemäßen Entstaubers mit schematischer Beschaltung der Versorgung derselben;
- Fig. 4: eine Darstellung eines ersten Steckelements und
- Fig. 5: eine Darstellung eines zweiten Steckelements.

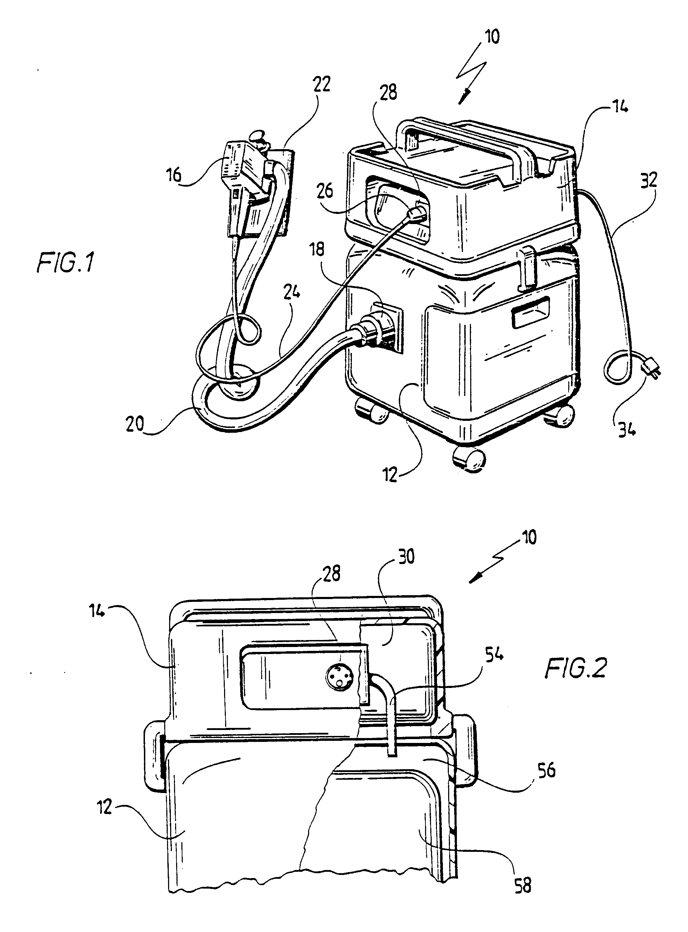

Ein Ausführungsbeispiel eines als Ganzes mit 10 bezeichneten erfindungsgemäßen Entstaubers, dargestellt in Fig. 1, umfaßt einen als Ganzes mit 12 bezeichneten Staubbehälter sowie einen auf diesen aufsetzbaren Gebläseaufsatz 14.

Dieser Entstauber 10 dient zur Absaugung von Staub einer als Ganzes mit 16 bezeichneten elektrischen Handschleifmaschine als Beispiel für eine Handwerkzeugmaschine, bei welcher es sich im dargestellten Fall um einen Schwingschleifer handelt. Hierzu führt von einem Ansaugstutzen 18 im Staubbehälter 12 ein Saugschlauch 20 zu einem Schleifteller 22 der Schleifmaschine 16. Ferner führt ein Stromversorgungskabel 24 von der Schleifmaschine 16 zu einem Stecker 26,als Beispiel für ein erfindungsgemäßes Steckelement, welcher seinerseits in eine Steckdose 28, als Beispiel für ein erfindungsgemäßes Einsteckelement eingesteckt ist. Diese Steckdose 28 ist vorzugsweise am Gebläseaufsatz 14 angeordnet. Zur Energieversorgung eines in Fig. 2 angedeuteten, im Gebläseaufsatz 14 angeordneten Gebläses 30 und der Steckdose 28 führt von dem Gebläseaufsatz 14 ein Netzanschlußkabel 32 weg, welches mit einem üblichen Netzanschlußstecker 34 versehen ist.

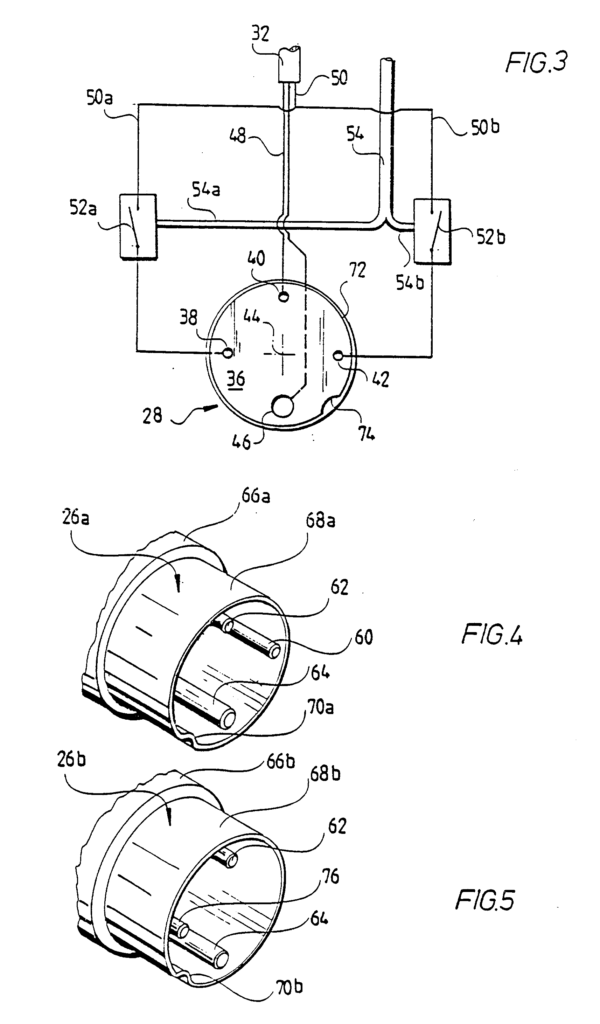

Die in Fig. 3 vergrößert dargestellte Steckdose 28 umfaßt einen vorzugsweise zylindrisch ausgebildeten Innenkörper 36, welcher drei Steckbuchsen 38, 40 und 42 trägt, die dem Innenkörper 36 vorzugsweise mit einem Winkelabstand von 90° um eine Mittelachse 44 des Innenkörpers 36 angeordnet sind.

Zusätzlich ist ebenfalls in einem Winkelabstand von 90° zur Steckbuchse 38 und 42 noch ein Nulleiteranschluß 46 vorgesehen.

Vorzugsweise sind die Steckbuchsen 38, 40 und 42 miteinander identisch ausgebildet, während der Schutzleiter anschluß 46 eine Steckbuchse mit einem größeren Innendurchmesser als die Steckbuchsen 38 bis 42 aufweist.

Die einzelnen Steckbuchsen 38 bis 42 sind nun folgendermaßen mit dem Netzanschlußkabel 32 verbunden: Ein erster Leiter 48 des Netzanschlußkabels 32 ist direkt zur Steckbuchse 40 geführt. Ein zweiter Leiter 50 teilt sich auf in zwei Äste 50a und 50b, wobei der erste Ast 50a über einen ersten Unterdruckabschalter 52a geführt ist und dann weiter zur Steckbuchse 38 verläuft, während der zweite Ast 50b über einen zweiten Unterdruckschalter 52b geführt ist und dann zur Steckbuchse 42 verläuft.

Von jedem der Unterdruckschalter 52a und 52b führt ein Zweig 54a und 54b zu einem gemeinsamen Unterdruckschlauch 54. Dieser Unterdruckschlauch 54 mündet in einen Zwischenraum 56 zwischen einem Staubfangbehälter 58, welcher in dem Staubbehälter 12 angeordnet ist und dem Gebläse 30, so daß die Unterdruckschalter 52a und 52b einen Unterdruck zwischen dem Staubfangbehälter 58 und dem Gebläse 30 messen.

Vorzugsweise sind die beiden Unterdruckschalter 52a und 52b so eingestellt, daß der erste Unterdruckschalter 52a bei einem ersten Unterdruck abschaltet, welcher niedriger liegt als ein zweiter Unterdruck, bei welchem der Unterdruckschalter 52b abschaltet.

In die Steckdose 28 sind nun, wie in Fig. 4 und 5 dargestellt, ein erster Stecker 26a oder ein zweiter Stecker 26b einsteckbar, wobei der erste Stecker 26a einen Steckstift 60 aufweist, welcher in die Steckbuchse 38 einsteckbar ist und einen Steckstift 62, welcher in die Steckbuchse 40 einsteckbar ist. Ferner weist der Stecker 26a noch einen Steckstift 64 auf, welcher in den Schutzleiteranschluß einsteckbar ist. Ein Gehäuse 66a des Steckers 26a umfaßt einen kreiszylindrischen Ring 68a, welcher den Innenkörper 36 umschließt und auf diesen aufsteckbar ist. Der Ring 68a ist dabei mit einem radial nach innen abstehenden Vorsprung 70a versehen. Dieser Vorsprung 70a ist so ausgebildet, daß er mit einer in einer Außenmantelfläche 72 des Innenkörpers 36 eingeformten Nut 74 formschlüssig in Eingriff bringbar ist, so daß das Gehäuse 66a nur in einer Drehstellung auf den Innenkörper 36 aufsteckbar ist.

Das Gehäuse 66b des Steckers 26b ist identisch wie das Gehäuse 66a ausgebildet und weist daher auch denselben Vorsprung 70b auf, welcher ebenfalls formschlüssig in die Nut 74 einführbar ist, so daß das Gehäuse 66b ebenfalls in derselben Drehstellung auf den Innenkörper 36 aufsteckbar ist.

Darüberhinaus weist der Stecker 26b ebenfalls den Steckstift 62 und den Steckstift 64 auf und zusätzlich einen Steckstift 76, welcher bezüglich einer durch die Steckstifte 62 und 64 definierten Ebene dem Steckstift 60 gegenüberliegend angeordnet ist und daher in die Steckbuchse 42 einsteckbar ist.

Die Steckstifte 60 und 62 bilden gemeinsam mit den Steckbuchsen 38 und 40 ein Paar elektrischer Steckkontakte und somit einen ersten steckbaren Versorgungsanschluß für eine mit dem Stecker 26a versehene erste Schleifmaschine, während die Steckstifte 62 und 76 gemeinsam mit den Steckbuchsen 42 und 40 ein Paar elektrischer Steckkontakte für einen zweiten steckbaren Versorgungsanschluß einer mit dem Stecker 26b versehenen zweiten Schleifmaschine bilden.

Somit besteht die Möglichkeit, durch Einstecken des Steckers 26a in die Steckdose 28 eine Abschaltung der Stromversorgung der mit diesem Stecker 26a versehenen Schleifmaschine bei dem ersten Unterdruck dadurch zu erreichen, daß der erste Unterdruckschalter 52a unterbricht. Wird dagegen der Stecker 26b in die Steckdose 28 eingesteckt, so wird eine mit diesem versehene Schleifmaschine bei einem zweiten Unterdruck abgeschaltet, welcher von dem zweiten Unterdruckschalter 52b erfaßt wird, der seinerseits den Zweig 50b des zweiten Leiters 50 unterbricht.

Die Unterdruckschalter 52a und 52b können nun so eingestellt werden, daß entsprechend dem Luftdurchsatz der Schleifteller 22 der mit den jeweiligen Steckern 26a oder 26b versehenen Schleifmaschinen 16 eine Unterbrechung der Stromversorgung stets bei demselben Füllgrad des Staubfangbehälters 58 erfolgt.

## Patentansprüche

1. Entstauber mit einem von einer kraftgetriebenen Handwerzeugmaschine erzeugten Staub in einen Staubfangbehälter befördernden Staubsauggebläse, mit einer Aufnahme für ein Steckelement zur Herstellung der Energieversorgung für die Handwerkzeugmaschine und mit einer Staubfangbehälterfüllabschaltung, welche bei einem bestimmten Unterdruck zwischen Staubfangbehälter und Staubsauggebläse die Energieversorgung der Handwerkzeugmaschine abschaltet, **dadurch gekennzeichnet,** daß der Entstauber (10) eine erste Aufnahme (36, 38, 40) für ein erstes Steckelement (26a) und eine zweite Aufnahme (36, 40, 42) für ein zweites Steckelement (26b) aufweist, daß die Aufnahmen (36, 38, 40, 42) so ausgebildet sind, daß nur bei in die erste Aufnahme (36, 38, 40) eingestecktem erstem Steckelement (26a) oder in die zweite Aufnahme (36, 40, 42) eingestecktem zweiten Steckelement (26b) eine Herstellung der Energieversorgung der Handwerkzeugmaschine (16) erfolgt, daß bei in die erste Aufnahme (36, 38, 40) eingestecktem ersten Steckelement (26a) die Staubfangbehälterfüllabschaltung (52a) bei einem ersten Unterdruck und bei in die zweite Aufnahme (36, 40, 42) eingestecktem zweiten Steckelement (26b) die Staubfangbehälterfüllabschaltung (52b) bei einem zweiten Unterdruck abschaltet.

2. Entstauber nach Anspruch 1, dadurch gekennzeichnet, daß die Staubfangbehälterfüllabschaltung für die Abschaltung beim ersten oder zweiten Unterdruck einen ersten bzw. zweiten Unterdruckschalter (52a bzw. 52b) umfaßt.

3. Entstauber nach Anspruch 1 oder 2, dadurch gekennzeichnet, daß die erste und die zweite Aufnahme (36, 38, 40; 36, 40, 42) unterschiedlich gestaltete Gehäuseelemente aufweisen, welche mit entsprechend unterschiedlich gestalteten Gehäuseelementen der Steckelemente (26a, b) in formschlüssigen Eingriff bringbar sind.

4. Entstauber nach einem der voranstehenden Ansprüche, dadurch gekennzeichnet, daß die erste und die zweite Aufnahme (36, 38, 40; 36, 40, 42) in einem einzigen Einsteckelement (28) vorgesehen sind.

5. Entstauber nach Anspruch 4, dadurch gekennzeichnet, daß das Einsteckelement (28) ein Gehäuse (36) aufweist, in welchem die beiden Aufnahmen (36, 38, 40; 36, 40, 42) angeordnet sind.

6. Entstauber nach Anspruch 5, dadurch gekennzeichnet, daß das Gehäuse (36) des Einsteckelements (28) beiden Aufnahmen (36, 38, 40; 36, 40, 42) gemeinsame Formschlußelemente (72, 74) umfaßt.

7. Entstauber nach Anspruch 6, dadurch gekennzeichnet, daß das Formschlußelement (72, 74) eine vom Steckelement (26a, b) zumindest teilweise umschlossene oder dieses umschliessende Steckaufnahme ist.

8. Entstauber nach einem der voranstehenden Ansprüche, dadurch gekennzeichnet, daß die Energieversorgung der Handwerkzeugmaschine (16) über die Aufnahmen (36, 38, 40; 36, 40, 42) und die Steckelemente (26a, b) geführt ist.

9. Entstauber nach Anspruch 8, dadurch gekennzeichnet, daß die Aufnahmen (36, 38, 40; 36, 40, 42) und die Steckelemente (26a, b) steckbare Versorgungsanschlüsse (38, 40; 40, 42; 60, 62; 62, 76) umfassen.

10. Entstauber nach Anspruch 9, dadurch gekennzeichnet, daß die Versorgungsanschlüsse (38, 40; 40, 42; 60, 62; 62, 76) von ineinander steckbaren Gehäuseelementen (36; 66a; 66b) umschlossen sind.

11. Entstauber nach Anspruch 9 oder 10, dadurch gekennzeichnet, daß die Versorgungsanschlüsse (38, 40) der ersten Aufnahme (36, 38, 40) und die Versorgungsanschlüsse (40, 42) der zweiten Aufnahme (36, 40, 42) unterschiedlich ausgebildet sind.

12. Entstauber nach einem der Ansprüche 9 bis 11, dadurch gekennzeichnet, daß die Versorgungsanschlüsse jeder Aufnahme (36, 38, 40; 36, 40, 42) mindestens zwei elektrische Steckkontakte (38, 40; 40, 42) umfassen.

13. Entstauber nach Anspruch 12, dadurch gekennzeichnet, daß die Steckkontakte (38, 40; 40, 42) unterschiedlich angeordnet sind.

14. Entstauber nach einem der Ansprüche 9 bis 13, dadurch gekennzeichnet, daß der Versorgungsanschluß (38, 40) der ersten Aufnahme (36, 38, 40) und der Versorgungsanschluß (40, 42) der zweiten Aufnahme (36, 40, 42) einen gemeinsamen Steckkontakt (40) aufweisen.

15. Entstauber nach einem der Ansprüche 8 bis 14, dadurch gekennzeichnet, daß durch den ersten Unterdruckschalter (52a) die Energieversorgung für den Versorgungsanschluß (38, 40) der ersten Aufnahme (36, 38, 40) und den zweiten Unterdruckschalter (52b) die Energieversorgung für den Versorgungsanschluß (40, 42) der zweiten Aufnahme (36, 40, 42) abschaltbar ist.

16. Entstauber nach einem der Ansprüche 12 bis 15, dadurch gekennzeichnet, daß die beiden Versorgungsanschlüsse (38, 40; 40, 42) einen zusätzlichen, für beide gemeinsamen Nulleiteranschluß (46) aufweisen.

17. Arbeitsgerät mit geringer Staubentwicklung, umfassend wenigstens eine Handwerkzeugmaschine mit einer einem Werkzeug derselben zugeordneten Staubabsaugung und einen mit letzterer über einen Saugschlauch verbundenen Entstauber, wobei der Handwerkzeugmaschine ein Steckelement zugeordnet ist, mit welchem beim Einstecken in eine Aufnahme am Entstauber die Energieversorgung der Handwerkzeugmaschine herstellbar ist, dadurch gekennzeichnet, daß eine erste Handwerkzeugmaschine (16) mit einem ersten Steckelement (26a) und eine zweite Handwerkzeugmaschine (16) mit einem zweiten Steckelement (26b) versehen sind, und daß der Entstauber (10) nach einem der Ansprüche 1 bis 16 ausgebildet ist.

## Claims

1. Dust remover having a dust aspirator conveying dust produced by a power-driven hand-tool appliance into a dust-collecting receptacle, having a socket for a plug element for creating the power supply for the hand-tool appliance and having a dust-collecting receptacle filling cut-out which, in the event of a certain underpressure between the dust-collecting receptacle and the dust aspirator, shuts off the power supply to the hand-tool appliance, characterised in that the dust remover (10) exhibits a first socket (36, 38, 40) for a first plug element (26a) and a second socket (36, 40, 42) for a second plug element (26b), in that the sockets (36, 38, 40, 42) are configured such that power is supplied to the hand-tool appliance (16) only where the first plug element (26a) is inserted into the first socket (36, 38, 40) or the second plug element (26b) into the second socket (36, 40, 42), in that, where the first plug element (26a) is inserted into the first socket (36, 38, 40), the dust-collecting receptacle filling cut-out (52a) shuts off at a first underpressure and, where the second plug element (26b) is inserted into the second socket (36, 40, 42), the dust-collecting receptacle filling cut-out (52b) shuts off at a second underpressure.

2. Dust remover according to Claim 1, characterised in that the dust-collecting receptacle filling cut-out for shutting off at the first or second underpressure comprises a first or second vacuum switch (52a or 52b).

3. Dust remover according to Claim 1 or 2, characterised in that the first and the second socket (36, 38, 40; 36, 40, 42) exhibit differently shaped housing elements which can be brought into positive-locking engagement with correspondingly differently shaped housing elements of the plug elements (26a, b).

4. Dust remover according to one of the preceding claims, characterised in that the first and the second socket (36, 38, 40; 36, 40, 42) are provided in a single insertion element (28).

5. Dust remover according to Claim 4, characterised in that the insertion element (28) exhibits a housing (36) in which the two sockets (36, 38, 40; 36, 40, 42) are disposed.

6. Dust remover according to Claim 5, characterised in that the housing (36) of the insertion element (28) comprises positive-locking elements (72, 74) common to both sockets (36, 38, 40; 36, 40, 42).

7. Dust remover according to Claim 6, characterised in that the positive-locking element (72, 74) is a plug socket enclosed at least partially by the plug element (26a, b) or enclosing the said plug element.

8. Dust remover according to one of the preceding claims, characterised in that the power supply to the hand-tool appliance (16) is conducted via the sockets (36, 38, 40; 36, 40, 42) and the plug elements (26a, b).

9. Dust remover according to Claim 8, characterised in that the sockets (36, 38, 40; 36, 40, 42) and the plug elements (26a, b) comprise plug-in supply connections (38, 40; 40, 42; 60, 62; 62, 76).

10. Dust remover according to Claim 9, characterised in that the supply connections (38, 40; 40, 42; 60, 62; 62, 76) are enclosed by housing elements (36; 66a; 66b) which can be fitted one inside the other.

11. Dust remover according to Claim 9 or 10, characterised in that the supply connections (38, 40) of the first socket (36, 38, 40) and the supply connections (40, 42) of the second socket (36, 40, 42) are differently configured.

12. Dust remover according to one of Claims 9 to 11, characterised in that the supply connections of each socket (36, 38, 40; 36, 40, 42) comprise at least two electrical plug contacts (38, 40; 40, 42).

13. Dust remover according to Claim 12, characterised in that the plug contacts (38, 40; 40, 42) are differently disposed.

14. Dust remover according to one of Claims 9 to 13, characterised in that the supply connection (38, 40) of the first socket (36, 38, 40) and the supply connection (40, 42) of the second socket (36, 40, 42) exhibit a common plug contact (40).

15. Dust remover according to one of Claims 8 to 14, characterised in that the power supply for the supply connection (38, 40) of the first socket (36, 38, 40) can be shut off by the first vacuum switch (52a) and the power supply for the supply connection (40, 42) of the second socket (36, 40, 42) by the second vacuum switch (52b).

16. Dust remover according to one of Claims 12 to 15, characterised in that the two supply connections (38, 40; 40, 42) exhibit an additional neutral conductor connection (46) which is common to both of them.

17. Implement having a low dust generation, comprising at least one hand-tool appliance having a dust extractor assigned to a tool of the said appliance and a dust remover connected to the said dust extractor by a suction hose, there being assigned to the hand-tool appliance a plug element with which, when inserted into a socket on the dust remover, the power supply to the hand-tool appliance can be created, characterised in that a first hand-tool appliance (16) is provided with a first plug element (26a) and a second hand-tool appliance (16) with a second plug element (26b) and in that the dust remover (10) is configured according to one of Claims 1 to 16.

## Revendications

1. Dépoussiéreur comportant un ventilateur extracteur de poussière, envoyant la poussière produite par une machine-outil à main motorisée, dans un collecteur de poussière, comportant un logement pour un élément enfichable destiné à réaliser l'alimentation en énergie de la machine-outil à main et comportant une coupure de remplissage du collecteur de poussière qui coupe l'alimentation en énergie de la machine-outil à main lorsqu'est atteinte une dépression déterminée entre le collecteur de poussière et l'extracteur de poussière, caractérisé en ce que le dépoussiéreur (10) comporte un premier logement (36, 38, 40) pour un premier élément enfichable (26a) et un second logement (36, 40, 42) pour un second élément enfichable (26b), en ce que les logements (36, 38, 40, 42) sont tels que l'alimentation en énergie de la machine-outil à main (16) n'est réalisée que lorsque le premier élément enfichable (26a) est inséré dans le premier logement (36, 38, 40) ou le second élément enfichable (26b) est inséré dans le second logement (36, 40, 42), en ce que lorsque le premier élément enfichable (26a) est inséré dans le premier logement (36, 38, 40), la coupure de remplissage du collecteur de poussière (52a) intervient en cas d'une première dépression et lorsque le second élément enfichable (26b) est inséré dans le second logement (36, 40, 42), la coupure de remplissage de collecteur de poussière (52b) intervient pour une seconde dépression.

2. Dépoussiéreur selon la revendication 1, caractérisé en ce que la coupure de remplissage du collecteur de poussière comprend, pour la coupure lors de la première dépression, un premier interrupteur de dépression (52a) et pour la coupure lors de la seconde dépression, un second interrupteur de dépression (52b).

3. Dépoussiéreur selon les revendications 1 ou 2, caractérisé en ce que le premier et le second logements (36, 38, 40 ; 36, 40, 42) comportent des éléments de boîtier de forme différente qui peuvent être amenés en prise, par concordance de forme, avec des éléments de boîtier, de forme différente correspondante, des éléments enfichables (26a, 26b).

4. Dépoussiéreur selon l'une des revendications précédentes, caractérisé en ce que le premier et le second logements (36, 38, 40 ; 36, 40, 42) sont prévus dans un unique élément d'enfichage (28).

5. Dépoussiéreur selon la revendication 4, caractérisé en ce que l'élément d'enfichage (28) comporte un boîtier (36) dans lequel sont prévus les deux logements (36, 38, 40 ; 36, 40, 42).

6. Dépoussiéreur selon la revendication 5, caractérisé en ce que le boîtier (36) de l'élément d'enfichage (28) comporte des éléments d'assemblage par concordance de forme (72, 74) communs aux deux logements (36, 38, 40; 36, 40, 42).

7. Dépoussiéreur selon la revendication 6, caractérisé en ce que l'élément d'assemblage par concordance de forme (72, 74) est un logement d'enfichage entouré au moins partiellement par l'élément enfichable (26a, 26b) ou entourant celui-ci.

8. Dépoussiéreur selon l'une des revendications précédentes, caractérisé en ce que l'alimentation en énergie de la machine-outil à main (16) passe par les logements (36, 38, 40 ; 36, 40, 42) et les éléments enfichables (26a, 26b).

9. Dépoussiéreur selon la revendication 8, caractérisé en ce que les logements (36, 38, 40 ; 36, 40, 42) et les éléments enfichables (26a, 26b) comprennent des raccords d'alimentation (38, 40 ; 40, 42 ; 60, 62 ; 62, 76) enfichables.

10. Dépoussiéreur selon la revendication 9, caractérisé en ce que les raccords d'alimentation (38, 40 ; 40, 42 ; 60, 62 : 62, 76) sont entourés par des éléments de boîtier (36 : 66a : 66b) enfichables les uns dans les autres.

11. Dépoussiéreur selon la revendication 9 ou 10, caractérisé en ce que les raccords d'alimentation (38, 40) du premier logement (36, 38, 40) et les raccords d'alimentation (40, 42) du second logement (36, 40, 42) sont conçus différemment.

12. Dépoussiéreur selon l'une des revendications 9 à 11, caractérisé en ce que les raccords d'alimentation de chaque logement (36, 38, 40 ; 36, 40, 42) comprennent au moins deux contacts à fiches électriques (38, 40 ; 40, 42).

13. Dépoussiéreur selon la revendication 12, caractérisé en ce que les contacts à fiches (38, 40 : 40, 42) sont montés différemment.

14. Dépoussiéreur selon l'une des revendications 9 à 13, caractérisé en ce que le raccord d'alimentation (38, 40) du premier logement (36, 38, 40) et le raccord d'alimentation (40, 42) du second logement (36, 40, 42) comportent un contact à fiches (40) commun.

15. Dépoussiéreur selon l'une des revendications 8 à 14, caractérisé en ce que l'alimentation en énergie du raccord d'alimentation (38, 40) du premier logement (36, 38, 40) peut être coupée par le premier interrupteur de dépression (52a) et l'alimentation en énergie du raccord d'alimentation (40, 42) du second logement (36, 40, 42), par le second interrupteur de dépression (52b).

16. Dépoussiéreur selon l'une des revendications 12 à 15, caractérisé en ce que les deux raccords d'alimentation (38, 40 ; 40, 42) comportent un branchement de conducteur neutre (46), supplémentaire, commun aux deux raccords.

17. Outil de travail dégageant peu de poussière, comportant au moins une machine-outil à main avec une aspiration de poussière associée à un outil de celle-ci ainsi qu'un dépoussiéreur relié à cette aspiration par un tuyau d'aspiration, à la machine-outil à main étant associé un élément enfichable dont l'insertion dans un logement du dépoussiéreur permet d'établir l'alimentation en énergie de la machine-outil à main, caractérisé en ce qu'une première machine-outil à main (16) est pourvue d'un premier élément enfichable (26a) et une seconde machine-outil à main (16) d'un second élément enfichable (26b) et en ce que le dépoussiéreur (10) est conçu suivant l'une des revendications 1 à 16.
